# EUROPÄISCHE PATENTANMELDUNG

(11) **EP 0 840 204 A2**
(43) Veröffentlichungstag der Anmeldung: **06.05.1998**
(21) Anmeldenummer: 97118988.1
(22) Anmeldetag: 30.10.1997
(51) Int. Cl.: G06F 7/02

(54) **Elektrische Schaltungsanordnung zur seriellen Auswertung einer Bit-Folge**

(30) Priorität: 31.10.1996 DE 19645055
(71) Anmelder: SGS-THOMSON MICROELECTRONICS GMBH, 85630 Grasbrunn (DE)
(72) Erfinder: Heinrich, Peter, 83533 Edling (DE)
(74) Vertreter: Hirsch, Peter

(57) **Zusammenfassung**

Elektrische Schaltungsanordnung zur seriellen Auswertung einer Bitfolge, mit einer ODER-Verknüpfungsschaltung (OR) mit einem ersten Eingang (OE1), einem zweiten Eingang (OE2) und einem Ausgang (OA); und mit einem getakteten D-Flipflop (FF), das einen Setz-Eingang (S), einen Rücksetzeingang (R), einen nicht invertierenden Flipflop-Ausgang (Q) und einen Takteingang (CLK) aufweist; wobei die auszuwertende Bitfolge dem ersten Eingang (OE1) der ODER-Verknüpfungsschaltung (OR) zuführbar ist; der Dateneingang (D) des Flipflop (FF) mit dem Ausgang (OA) der ODER-Verknüpfungsschaltung (OR) verbunden ist; dem Takteingang (CLK) ein einem Bitfolgetakt entsprechendes Taktsignal zuführbar ist; der Flipflop-Ausgang (Q) mit dem zweiten Eingang (OE2) der ODER-Verknüpfungsschaltung (OR) verbunden ist; von dem Flipflop-Ausgang (Q) ein Auswertungsergebnissignal für die ausgewertete Bitfolge abnehmbar ist; und dem Rücksetz-Eingang (R) vor Beginn der Auswertung einer Bitfolge ein Rücksetzsignal zuführbar ist, welches am Flipflop-Ausgang (Q) ein Auswertungsergebnissignal vorbestimmter Art hervorruft.

## Beschreibung

Die Erfindung betrifft eine elektrische Schaltungsanordnung zur Auswertung einer Bitfolge. Es kommt häufig vor, daß der Inhalt einer Bit-folge ausgewertet werden muß. Beispielsweise muß überprüft werden, ob sämtliche Bits einer Bitfolge den Logikwert "1" oder den Logikwert "0" aufweisen oder ob dies mindestens für einen zusammenhängenden Teil der Bits einer Bitfolge zutrifft.

Herkömmlicherweise verwendet man zu einer solchen Auswertung beispielsweise Schieberegister, die je eine der Bitfolgenlänge entsprechende Registerstellenzatu haben, wobei in einem Register die empfangene Bitfolge und in dem anderen Schieberegister diejenige Bitfolge, mit welcher die empfangene Bitfolge auf Übereinstimmung überprüft werden soll, gespeichert wird. Die Auswertung, wie weit Übereinstimmung zwischen den Inhalten dieser beiden Schieberegister besteht, wird mittels Logik-Verknüpfungsschaltungen durchgeführt. Beispielsweise werden die Registerstelleninhalte der sich jeweils entsprechenden Registerstellen der beiden Schieberegister mit je einem XOR-Glied auf Übereinstimmung oder Nicht-Übereinstimmung untersucht und werden die Ausgangslogikwerte aller XOR-Glieder einer UND-Verknüpfung unterzogen, und zwar mittels eines UND-Gliedes, das soviele Eingänge aufweist, wie XOR-Glieder, das heißt, Registerstellen pro Schieberegister, vorhanden sind. Da am Ausgang eines XOR-Gliedes je nachdem, ob die seinen beiden Eingängen zugeführten Logikwerte übereinstimmen oder nicht, ein Ausgangslogikwert "0'' oder "1'' auftritt, erscheint am Ausgang des UND-Gliedes je nachdem, ob Übereinstimmung zwischen der empfangenen Bitfolge und der gespeicherten Bitfolge besteht, ein Logikwert "0" oder "1".

Eine derartige Auswertungsschaltung erfordert einen relativ komplexen und aufwendigen Schaltungsaufbau und entsprechend viele Wortleitungen, was im Fall der monolithischen Integration einen entsprechend hohen Chipflächenbedarf nach sich zieht.

Es ist heutzutage üblich, bei einem System, das eine oder mehrere Sendestellen und mehrere Empfangsstellen aufweist, ein von einer Sendestelle ausgesendetes Signal an alle Empfangsstellen zu schicken, und zwar über einen gemeinsamen Übertragungskanal, beispielsweise in Form einer Busleitung. Damit die Möglichkeit besteht, von der Sendestelle Nachrichten nur an bestimmte Empfangsstellen zu schicken, enthalten die von der Sendestelle gesendeten Signale jeweils zusätzlich zu der zu übertragenden Nachricht ein Adressenwort. Dabei ist jeder der Empfangsstellen mindestens ein für sie bestimmtes Adressenwort zu-geordnet. Die einzelnen Empfangsstellen weisen Vorrichtungen zur Selektion der ihnen jeweils zugeordneten Adressenwörter auf. Daher kann diejenige Empfangsstelle, für welche die jeweils gesendete Nachricht bestimmt ist, solche Nachrichten aus dem Übertragungskanal entnehmen, welche mit einem für diese Empfangsstellen bestimmten oder akzeptierbaren Datenwort versehen ist.

Für die Überprüfung, ob das Adressenwort der über den Übertragungskanal, beispielsweise die Busleitung, jeweils gesendeten Nachricht für eine bestimmte Empfangsstelle bestimmt ist oder nicht, wird in der Empfangsstelle das Adressenwort der jeweils gesendeten Nachricht auf Übereinstimmung mit dem dieser Empfangsstelle zugeordneten Adressenwort bzw. den dieser Empfangsstelle zugeordneten Adressenwörtern verglichen. Dies geschieht herkönunlicherweise mittels Filterregistern, die soviele Registerstellen aufweisen, wie die Adressenwörter Adressenwortbits haben, und in denen eine Bitfolge abgelegt ist, die der Bitfolge eines akzeptablen Adressenwortes entspricht. Das Adressenwort jeder der einzelnen Empfangsstelle angebotenen Nachricht wird mit der in dem Filterregister dieser Empfangsstelle gespeicherten Filterbitfolge auf Übereinstimmung oder Nicht-Übereinstimmung verglichen. Besteht Übereinstimmung, wird das gerade empfangene Adressenwort akzeptiert und die diesem Adressenwort beigepackte Nachricht zu Verbrauchereinheiten dieser Empfangsstelle durchgelassen. Stimmt das gerade empfangene Adressenwort nicht mit der in einem der Filter abgelegten Bitfolge überein, wird dieses Adressenwort nicht akzeptiert und gelangt die diesem Adressenwort beigepackte Nachricht nicht zu Verbrauchereinheiten dieser Empfangsstelle.

Für den Vergleich, ob ein empfangenes Adressenwort mit der in dem Filter abgelegten Bitfolge übereinstimmt oder nicht, werden herkömmlicherweise XOR-Verknüpfungsschaltungen verwendet, und zwar pro Bitstelle von Adressenwort und Filter eine. Weist das Adressenwort beispielsweise acht Bitstellen auf, besitzt auch das Filter acht Bitstellen und sind für den Vergleich des jeweils empfangenen Adressenwortes mit der in dem Filter abgelegten Bitfolge acht XOR-Verknüpfungsschaltungen erforderlich. Die Ausgänge sämtlicher XOR-Verknüpfungsglieder werden auf eine ODER-Verknüpfungsgliedschaltung gegeben, die soviele Eingänge aufweist, wie XOR-Verknüpfungsglieder vorhanden sind. An einem Ausgang der ODER-Verknüpfungsschaltung erscheint je nachdem, ob zwischen dem gerade empfangenen Adressenwort und dem in dem Filter abgelegten Wort Übereinstimmung besteht oder nicht, der Logik-wert "0" oder der Logikwert "I". Der Logikwert "0" am Ausgang der ODER-Verknüpfungsschaltung bedeutet somit, daß das gerade empfangene Adressenwort von der betrachteten Empfangsstelle akzeptiert wird, während es nicht akzeptiert wird, wenn am Ausgang des ODER-Verknüpfungsgliedes der Logikwert "1" erscheint.

Bei der zuvor betrachteten herkömmlichen Losung hat jedes der möglicherweise mehreren Filter einer Empfangsstelle eine Filterlänge gleich der Adressenwortlänge. Dies erfordert einerseits Hardware mit einer Kapazität, die man aus Kostengründen mitunter nicht bereitstellen möchte. Andererseits sind zwischen dem Adressenregister, in dem die Adresse für den Filtervergleich zwischengespeichert wird, den Filtern, den für den Vergleich verwendeten XOR-Verknüpfungsgliedern und der diesen nachgeschalteten ODER-Verknüpfungsschaltung viele Wortleitungen erforderlich. Diese erfordern auf einem Chip einer monolithisch integrierten Halbleiterschaltung viel Platz. Auch XOR-Verknüpfungsglieder sind Schaltungsgruppen, die relativ viel Platz auf einem Halbleiterchip beanspruchen.

Der vorliegenden Erfindung liegt die Aufgabe zugrunde, den Schaltungsaufwand für die Auswertung von empfangenen Bitfolgen zu reduzieren, insbesondere auf eine Weise, die zur Einsparung von Chipfläche führt.

Eine Lösung dieser Aufgabe besteht in einer Schaltungsanordnung gemäß Anspruch 1. Weiterbildungen der erfindungsgemäßen Schaltungsanordnung sind in den abhängigen Ansprüchen angegeben.

Bei der erfindungsgemäßen Schaltungsanordnung sind zur Auswertung einer empfangenen Bitfolge lediglich ein ODER-Glied und ein Flipflop erforderlich, mittels welchen eine serielle Bitfolgenauswertung durchgeführt wird. Vor Beginn einer Bitfolgenauswertung wird das Flipflop über seinen Rücksetz-Eingang in einen definierten Zustand rückgesetzt, in welchem sein Ausgang, der zugleich den Ausgang der auswertenden Schaltungsanordnung bildet, auf denjenigen Logikwert gesetzt wird, welcher am Ende der jeweiligen Bitfolgenauswertung erscheint, wenn die Bitfolge Übereinstimmung mit einem vorbestimmten Bitfolgenmuster aufweist. Der Flipflop-Ausgang bleibt solange auf diesem Logikwert, wie Übereinstimmung zwischen den bereits überprüften Bits der empfangenen Bitfolge mit den entsprechenden Bits der vorbestimmten Bitfolge besteht. Wird auch nur hinsichtlich eines Bits der Bitfolge Nicht-Übereinstimmung mit der vorbestimmten Bitfolge festgestellt, geht der Flipflop-Ausgang auf den anderen Logikwert, bis das Flipflop zur Durchführung der Überprüfung einer weiteren empfangenen Bitfolge wieder rückgesetzt wird. Aus dem Logikwert des Flipflop-Ausgangs am Ende der Überprüfung der gesamten Bitfolge kann somit entnommen werden, ob die jeweils empfangene Bitfolge mit der vorbestimmten Bitfolge übereinstimmt oder nicht.

Die erfindungsgemäße Schaltungsanordnung kann entweder dafür verwendet werden, eine Bitfolge daraufhin zu überprüfen, ob sie von ihrem Beginn an eine vorbestimmte Anzahl aufeinanderfolgender gleicher Logikwerte aufweist oder nicht. Dabei kann die vorbestimmte Anzahl die Gesamtzahl der Bits der Bitfolge sein oder nur ein Teil dieser Gesamtzahl.

Die erfindungsgemäße Schaltungsanordnung eignet sich auch sehr gut zur Akzeptanzprüfung von Adressenwörtern. Hierfür benötigt man zusätzlich zu den beiden bereits genannten Schaltungskomponenten, nämlich dem ODER-Glied und dem Flipflop, lediglich ein Filterregister, in dem das zu akzeptierende Adressenwort gespeichert ist, und ein XOR-Glied mit zwei Eingängen, wobei einem dieser Eingänge Bit für Bit das auf Akzeptanz zu überprüfende Adressenwort und dem anderen dieser Eingänge Bit für Bit der im Filtertegister gespeicherte Filterinhalt zugeführt wird, und zwar mit gleichem Zuführtakt.

Dem Filterregister einer derartigen Schaltungsanordnung zur Akzeptanzüberprüfung kann ein Maskenregister zugeordnet sein, in dem eine Maskenbitfolge gespeichert ist, deren Inhalt bestimmt, welche Bits eines zu überprüfenden Adressenwortes mit den entsprechenden Bits im Filterregister identisch übereinstimmen müssen und welche der Adressenwortbits mit den entsprechenden Filterbits nicht übereinzustimmen brauchen, um das zu überprüfende Adressenwort zu akzeptieren.

Im Vergleich zu herkömmlichen Akzeptanzüberprüfungsschaltungen hat eine mit einer erfindungsgemäßen Schaltungsanordnung aufgebaute Akzeptanzüberprüfungsschaltung einen sehr einfachen Schaltungsaufbau und einen sehr geringen Chipflächenbedarf.

Die Erfindung wird nun anhand von Ausführungsformen näher erläutert. In den Zeichnungen zeigen:
**Fig. 1** eine Ausführungsform der Erfindung zur Überprüfung, ob eine empfangene Bitfolge einem vorbestimmten Bitfolgemuster entspricht;
**Fig. 2** eine erste Ausführungsform einer erfindungsgemäßen Schaltungsanordnung zur Akzeptanzüberprüfung von Adressenwörtern, und zwar in Verbindung mit einer UND-Verknüpfungsschaltung;
**Fig. 3** eine zweite Ausführungsform einer erfindungsgemäßen Schaltungsanordnung zur Akzeptanzüberprüfung von Adressenwörtern, und zwar in Verbindung mit einem Filterregister; und
**Fig. 4** eine dritte Ausführungsform einer erfindungsgemäßen Schaltungsanordnung zur Akzeptanzüberprüfung von Adressenwörter, und zwar in Verbindung mit einem Filterregister und einem Maskenregister.

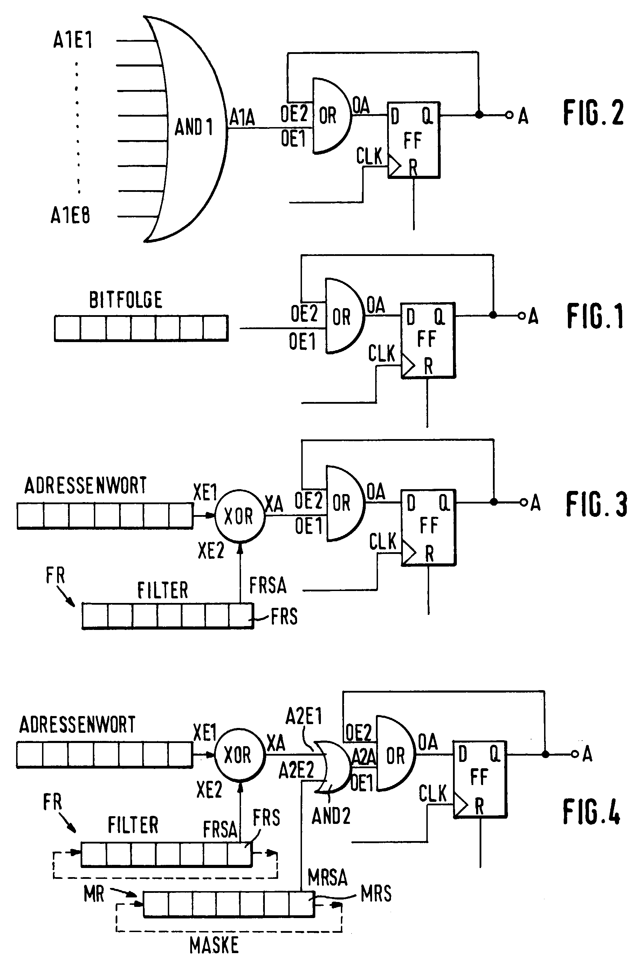

Die in Fig. 1 gezeigte Ausfuhrungsform einer erfindungsgemaßen Schaltungsanordnung dient dazu, eine empfangene Bitfolge daraufhin zu überprüfen, ob alle ihre Bits den Logikwert "0" haben. Diese Schaltungsanordnung umfaßt eine Reihenschaltung aus einem ODER-Glied OR und einem getakteten D-Flipflop FF. Das ODER-Glied OR weist einen ersten Eingang OE1, einen zweiten Eingang OE2 und einen Ausgang OA auf. Das Flipflop FF besitzt einen Rücksetzeingang R, einen Dateneingang D, wobei ein Datenwert D = "0" zum Rücksetzen des Flipflop FF führt, einen nicht-invertierenden Ausgang Q und einen Takteingang CLK. Der Ausgang Q bildet gleichzeitig den Ausgang A der gesamten Schaltungsanordnung. Der Dateneingang D des Flipflop FF ist mit dem Ausgang OA des ODER-Gliedes OR verbunden. Der zweite Eingang OE2 des ODER-Gliedes OR ist mit dem Ausgang Q des Flipflop FF verbunden. Dem Rücksetzeingang R wird vor Beginn der Überprüfung einer empfangenen Bitfolge ein Rücksetzsignal zugeführt, das am Ausgang Q den Logikwert "0" hervorruft. Dem Takteingang CLK wird ein Taktsignal zugeführt, dessen Taktfrequenz der Bitfolgefrequenz der zu überprüfenden Bitfolge entspricht. Die zu überprüfende Bitfolge wird dem ersten Eingang OE1 des ODER-Gliedes OR zugeführt, und zwar nacheinander Bit für Bit. Zu diesem Zweck kann die zu überprüfende Bitfolge direkt auf den ersten Eingang OE1 gegeben werden oder nach Zwischenspeicherung in einem Schieberegister. Dieses besitzt eine Registerausgangsstelle, die mit OE1 verbunden ist. Beim Hindurchschieben der zu überprüfenden Bitfolge durch das Schieberegister wird diese Bitfolge Bit für Bit durch die Registerausgangsstelle hindurchgeschoben und somit Bit für Bit auf OE1 gegeben.

Die in Fig. 1 gezeigte Schaltungsanordnung funktioniert folgendermaßen:

Nachdem das Flipflop FF vor Beginn der jeweils zu überprüfenden Bitfolge in den Zustand rückgesetzt worden ist, in welchem am Ausgang Q der Logikwert "0" erscheint, tritt auch am zweiten Eingang OE2 des ODER-Gliedes OR der Logikwert "0" auf. Es hängt daher von dem dem ersten Eingang OE1 jeweils angebotenen Logikwert ab, ob am Ausgang OA des ODER-Gliedes OR ein Logikwert "0" oder ein Logikwert "1" auftritt. Dieser an OA erscheinende Logikwert wird beim Auftreten der nächsten schaltenden Flanke des dem Takteingang CLK zugeführten Taktsignals zum Ausgang Q des Flipflop FF durchgeschaltet. Das heißt, solange die dem Eingang OE1 von OR nacheinander angebotenen Bits der zu überprüfenden Bitfolge je den Logikwert "0" haben, bleibt der Q-Ausgang von FF auf dem Logikwert "0". Erscheint an OE1 ein Bit mit dem Logikwert "1", schaltet der Q-Ausgang von FF auf den Logikwert "1" um, was zu einem Logikwert "1" am Ausgang OA des ODER-Gliedes OR führt. Unabhängig davon, welche Logikwerte die nachfolgenden Bits der zu überprüfenden Bitfolge haben, bleiben danach OA und Q auf dem Logikwert "1", bis das Flipflop FF zur Vorbereitung der Überprüfung einer weiteren Bitfolge wieder rückgesetzt wird. Der Logikwert am Q-Ausgang zeigt somit an, ob sämtliche Bits der zu überprüfenden Bitfolge den Logikwert "0" aufweisen oder nicht. Im ersteren Fall weist der Q-Ausgang am Ende der Überprüfung einer Bitfolge den Logikwert "0" auf, im letzteren Fall den Logikwert "1".

Man kann mit der in Fig. 1 gezeigten Schaltungsanordnung Bitfolgen auch daraufhin überprüfen, ob jedes ihrer Bits den Logikwert "1" aufweist. In diesem Fall ordnet man vor dem ersten Eingang OE1 des ODER-Gliedes OR einen (nicht dargestellten) Inverter an, so daß OE1 solange Bits mit dem Logikwert "0" angeboten werden, wie die Bits der zu überprüfenden Bitfolge den Logikwert "1" haben. In diesem Fall bedeutet ein Logikwert "0" am Q-Ausgang am Ende der Überprüfung einer Bitfolge, daß alle ihre Bits den Logikwert "1" aufweisen.

Die in Fig. 2 gezeigte Schaltungsanordnung kann für eine Akzeptarzüberprüfung von Adressenwörtern verwendet werden. Und zwar ist diese Schaltungsanordnung in Verbindung mit einer segmentweisen Adressenwortüberprüfung verwendbar, wie sie ausführlicher in der gleichzeitig eingereichten Patentanmeldung "Vorrichtung und Verfahren zur Selektion von Adressenwörtern" der Anmelderin (Deutsche Patentanmeldung 196 45 054.3) deren Inhalt hiermit durch Bezugnahme ausdrücklich in den Offenbarungsgehalt der vorliegenden Anmeldung mit aufgenommen wird, ausführlich erläutert und dargestellt ist. Dabei werden die einzelnen Adressenwörter in Adressenwortsegmente gleicher Segmentbitlänge unterteilt und werden die einzelnen Adressenwortsegmente des jeweils auf Akzeptanz zu überprüfenden Adressenwortes mit den Speicherinhalten von den einzelnen Adressenwortsegmenten zugeordneten Segmentfiltern auf Übereinstimmung oder Nicht-Übereinstimmung verglichen. Am Ende der Überprüfung eines jeden Adressenwortsegmentes erscheint ein Logikwertmuster mit einer vorbestimmten Anzahl paralleler Logikwerte, wobei diese Anzahl beispielsweise 8 ist.

Bei in den Figuren 1a und 1b der gleichzeitig eingereichten Patentanmeldung (196 45 054.3) dargestellten Ausführungsformen werden die am Ende der einzelnen Adressenwortsegmente auftretenden Logikwertmuster mit Hilfe eines UND-Gliedes einer UND-Verknüpfung unterzogen. Dieses UND-Glied weist eine Anzahl von Eingängen auf, die so groß ist wie die Zahl der parallelen Logikwerte des jeweiligen Logikwertmusters.

Eine der Fig. 1b der genannten gleichzeitig eingereichten Patentanmeldung (196 45 054.3 ) entsprechende Schaltungsanordnung zur Auswertung der Segmentüberprüfungsergebnisse ist in Fig. 2 der vorliegenden Anmeldung gezeigt. Diese umfaßt ein UND-Glied AND1 der genannten Art, das bei der in Fig. 2 gezeigten Ausführungsform 8 Eingänge A1E1, A1E2, A1E3, ... A1E8 aufweist, denen am Ende einer jeden segmentweisen Überprüfung ein Logikwertmuster mit 8 Logikwerten zugeführt wird. Für den Fall, daß das jeweils überprüfte Adressenwortsegment des auf Akzeptenz zu überprüfenden Adressenwortes mit einem Segment eines akzeptierbaren Adressenwortes übereinstimmt, erscheint an einem Ausgang A1A des UND-Gliedes AND1 der Logikwert "0", anderenfalls der Logikwert "1", wie in der gleichzeitig eingereichten Patentanmeldung (196 45 054.3) ausführlich erläutert ist.

Bei der Akzeptanzuberprüfüng eines Adressenwortes erscheinen also am Ausgang A1A des UND-Gliedes AND1 nacheinander so viele Logikwerte, wie ein Adressenwort Adressenwortsegmente aufweist. Diese segmentweise am Ausgang A1A auftretenden Logikwerte werden der Reihe nach auf eine Auswertungsschaltung gegeben, die den gleichen Aufbau wie in Fig. 1 der vorliegenden Anmeldung hat, nämlich eine Reihenschaltung aus einem ODER-Glied OR und einem Flipflop FF.

Solange am Ausgang A1A des UND-Gliedes AND1 der Reihe nach Logikwerte "0" auftreten, bleibt der Q-Ausgang des Flipflops FF auf dem Logikwert "0". Sobald am Ausgang A1A des UND-Gliedes AND am Ende eines Adressenwortsegmentes der Logikwert "1" auftritt, kippt der Q-Ausgang des Flipflop FF auf den Logikwert "1" und bleibt dort bis zu einem erneuten Rücksetzen des Flipflop FF bestehen. Der Logikwert am Q-Ausgang am Ende der Überprüfung des letzten Adressenwortsegmentes des jeweiligen Adressenwortes zeigt daher an, ob das überprüfte Adressenwort akzeptabel ist oder nicht. Im ersteren Fall weist der Q-Ausgang den Logikwert "0" auf, im letzteren Fall den Logikwert "1".

Fig. 3 zeigt eine Ausführungsform einer erfindungsgemäßen Schaltungsanordnung zur Akzeptanzüberprüfüng von Adressenwörtern, die hinsichtlich der Reihenschaltung mit dem ODER-Glied OR und dem Flipflop FF mit der Ausführungsform gemäß Fig. 2 übereinstimmt, bei welcher jedoch anstelle des UND-Gliedes AND1 der Fig. 2 ein XOR-Glied XOR vorhanden ist, das einen ersten Eingang XE1, einen zweiten Eingang XE2 und einen mit dem ersten Eingang OE1 des ODER-Gliedes OR verbundenen Ausgang XA aufweist. Dem Eingang XE1 werden der Reihe nach die einzelnen Bits eines auf Akzeptanz zu überprüfenden Adressenwortes zugeführt. Dieses Adressenwort wird mit dem Inhalt eines Filterregisters FR verglichen, in dem das Bitmuster eines akzeptablen Adressenwortes gespeichert ist. Das Filterregister FR weist eine Ausgangsregisterstelle FRS auf, die einen mit XE2 verbundenen Registerausgang FRSA besitzt. Bei dem Filterregister FR kann es sich um ein zyklisches Schieberegister handeln, dessen Registerinhalt zyklisch durch das Schieberegister schiebbar ist, so daß der Reihe nach alle Bits der Filterbitfolge am Registerausgang FRSA vorbeigeschoben werden und deren Logikwerte der Reihe nach auf den zweiten Eingang XE2 des XOR-Gliedes XOR gelangen. Dieses Durchschieben durch das Filterregister FR geschieht mit dem gleichen Bitfolgetakt, mit welchem die Bits des zu überprüfenden Adressenwortes nacheinander dem ersten Eingang XE1 des XOR-Gliedes XOR zugeführt werden. Dabei kann die Bitfolge des Adressenwortes direkt oder nach Zwischenspeicherung in einem Adressenwortregister auf XE1 gegeben werden.

Da der Ausgang eines XOR-Gliedes je nachdem, ob die Logikwerte an seinen Eingängen übereinstimmen oder nicht, einen Logikwert "0" oder einen Logikwert "1" zeigt, treten am Ausgang XA von XOR nacheinander solange Logikwerte "0" auf, wie für die entsprechenden Bitstellen von zu überprüfendem Adressenwort und Inhalt des Filterregisters FR Übereinstimmung besteht. Wird hinsichtlich eines Bits des Adressenwortes Nicht-Übereinstimmung mit dem entsprechenden Bit im Filterregister FR festgestellt, erscheint am Ausgang XA der Logikwert "1".

Wie bei den Ausführungsformen in den Figuren 1 und 2 bedeutet dies, daß am Q-Ausgang des Flipflop FF der Fig. 3 solange der Logikwert "0" erscheint, wie nacheinander Übereinstimmung zwischen Adressenwortbits und zugehörigen Filterbits besteht. Auch bei der Ausführungsform nach Fig. 3 gilt wieder, daß am Ende der Überprüfung des letzten Bits des jeweiligen Adressenwortes ein Logikwert "0" am Q-Ausgang des Flipflops FF ein akzeptables Adressenwort und der Logikwert "1" am Q-Ausgang ein nicht-akzeptables Adressenwort signalisiert.

Die in Fig. 4 gezeigte Ausführungsform stellt eine Modifikation der Ausführungsform nach Fig. 3 dar, insofern, als zusätzlich zu dem Filterregister FR noch ein Maskenregister MR vorhanden ist, das ebensoviele Registerstellen wie das Filterregister FR aufweist und damit eine Anzahl von Registerstellen, die gleich der Anzahl der Adressenwortbits ist. Bei dieser Ausführungsform ist zwischen das XOR-Glied XOR und den Eingang OE1 ein zweites UND-Glied AND2 geschaltet, das einen mit dem Ausgang XA von XOR verbundenen ersten Eingang A2E1, einen mit einem Registerausgang MRSA einer Ausgangsregisterstelle MRS des Maskenregisters MR verbundenen zweiten Eingang A2E2 und einen mit dem ersten Eingang OE1 des ODER-Gliedes OR verbundenen Ausgang A2A besitzt. Der Rest der in Fig. 4 gezeigten Ausführungsform stimmt mit der in Fig. 3 gezeigten Ausführungsform überein. In beiden Fällen wird das Flipflop FF über seinen Takteingang CLK mit einem Taktsignal getaktet, dessen Frequenz der Bitfolgefrequenz des zu überprüfenden Adressenwortes entspricht, mittels welcher auch die Speicherinhalte des Filtetregisters FR und des Maskenregisters MR geschoben werden.

Auch das Maskenregister MR kann ein zyklisches Schieberegister sein, dessen Speicherinhalt zyklisch durch die Ausgangsregisterstelle MRS geschoben und damit bitweise dem zweiten Eingang A2E2 von AND2 zugeführt wird.

Die Maske in Form des Maskenregisters MR dient dazu, für bestimmte Bitstellen der Adressenwortbitfolgen festzulegen, ob diese mit dem Speicherinhalt der entsprechenden Registerstelle des Filtertegisters FR übereinstimmen müssen oder nicht, damit das jeweils überprüfte Adressenwort akzeptiert wird In Maskenregisterstellen, die solchen Bitstellen der Adressenwörter zugeordnet sind, die mit dem Speicherinhalt der entsprechenden Filterregisterstellen übereinstimmen müssen, damit das jeweilige Adressenwort akzeptiert wird, wird der Logikwert "1" eingespeichert. In Maskenregisterstellen, die zu Adressenwortbitstellen gehören, welche keine Übereinstimmung mit dem Speicherinhalt der entsprechenden Filterregisterstelle haben müssen, um ein Adressenwort zu akzeptieren, wird der Logikwert "0" eingespeichert. Ein Logikwert "0" in einer Maskenregisterstelle bedeutet, daß am Ausgang A2A des UND-Gliedes AND2 der Logikwert "0" unabhängig davon erscheint, auf welchem Logikwert sich gerade der Ausgang XA von XOR befindet.

Der Logikwert "1" in einer Maskenregisterstelle bedeutet, daß der Logikwert am Ausgang A2A des UND-Gliedes AND 2 davon abhängt, auf welchem Logikwert sich der Ausgang XA von XOR gerade befindet. Im ersteren Fall wird somit ignoriert, ob hinsichtlich des betroffenen Adressenwortbits Übereinstimmung mit dem Bit der entsprechenden Filterregisterstelle besteht, wällrend es bei einem Logikwert "1" in einer Maskenregisterstelle auf eine solche Übereinstimmung ankommt, um das überprüfte Adressenwort zu akzeptieren.

Eine Maskierung gemäß Fig. 4 kann man einsetzen, wenn eine Empfangsstelle mehr Adressenwörter als das im Filterregister FR gespeicherte Adressenwort akzeptieren können soll.

## Patentansprüche

1. Elektrische Schaltungsanordnung zur Überprüfung von beispielsweise über einen Datenbus von einer bestimmten Empfangsstelle empfangenen Adressenwörtern mit n Adressenwortbits auf Akzeptanz durch diese Empfangsstelle,
mit mindestens einem n Filterregisterstellen aufweisenden Filterregister (FR) zur Speicherung einer mit einem akzeptablen Adressenwort übereinstimmenden Filterbitfolge mit n Filterbits,
mit einer ODER-Verknüpfungsschaltung (OR) mit einem ersten Eingang (OE1), einem zweiten Eingang (OE2) und einem Ausgang (OA);
mit einem getakteten D-Flipflop (FF), das einen mit dem Ausgang (OA) der ODER-Verknüpfüngsschaltung (OR) verbundenen Dateneingang (D), einen nicht invertierenden Flipflop-Ausgang (Q) und einen Takteingang (CLK) aufweist,
und mit einer XOR-Verknüpfungsschaltung (XOR) mit einem ersten Eingang (XE1), dem mit einer vorbestimmten Bittaktfrequenz der Reihe nach die n Bits des auf Akzeptanz zu überprüfenden Adressenwortes zufuhrbar sind, mit einem zweiten Eingang (XE2), dem mit der vorbestimmten Bittaktfrequenz der Reihe nach die n Bits der Filterbitfolge zuführbar sind, und mit einem Ausgang (XA), der mit dem ersten Eingang (OE1) der ODER-Verknüpfungsschaltung (OR) verbunden ist,
wobei dem Takteingang (CLK) ein der Bittaktfrequenz entsprechendes Taktsignal zuführbar ist und ein am Ende des zu überprüfenden Adressenwortes am Flipflop-Ausgang (Q) auftretender Logikwert "0" Akzeptanz und ein Logikwert "1" Nicht-Akzeptanz dieses Adressenwortes signalisiert.

2. Schaltungsanordnung nach Anspruch 1,
mit einem n Maskenregisterstellen aufweisenden Maskenregister (MR) zur Speicherung einer Maskenbitfolge mit n Maskenbits,
wobei in den einzelnen Maskenregisterstellen je nach dem, ob bei der Akzeptanzprüfung für das der jeweiligen Maskenregisterstelle entsprechende Adressenwortbit Übereinstimmung mit dem je zugehörigen Filterbit gefordert wird oder nicht, der Logikwert "1" oder "0" gespeichert ist;
und mit einer zweiten UND-Verknüpfungsschaltung (AND2) mit einem ersten Eingang (A2E1), der mit dem Ausgang (XA) der XOR-Verknüpfungsschaltung (XOR) verbunden ist, einem zweiten Eingang (A2E2), der mit einem Ausgang des Maskenregisters (MR) verbunden ist, und mit einem Ausgang (A2A), der mit dem ersten Eingang (OE1) der ODER-Verknüpfungsschaltung verbunden ist.

3. Schaltungsanordnung nach Anspruch 1 oder 2,
bei welcher das Filterregister (FR) und/oder das Maskenregister (MR) als zyklisches Schieberegister ausgebildet ist, das eine Ausgangsregisterstelle (FRS bzw. MRS) umfaßt, die einen mit dem zugehörigen Eingang (XE1 bzw. XE2) der XOR-Verknüpfungsschaltung (XOR) verbundenen Registerausgang (FRSA bzw. MRSA) aufweist, und dessen Registerinhalt während eines Akzeptanzüberprüfungsvorgangs mit einem dem Bitfolgetakt entsprechenden Schiebetakt zyklisch durch das Schieberegister und somit durch die Ausgangsregisterstelle (FRS bzw. MRS) schiebbar ist.
